(19)

**Europäisches Patentamt**
**European Patent Office**
**Office européen des brevets**

(11)  **EP 4 279 887 B1**

(12)  **EUROPEAN PATENT SPECIFICATION**

(45) Date of publication and mention
of the grant of the patent:
**10.09.2025   Bulletin 2025/37**

(21) Application number: **23173475.7**

(22) Date of filing: **15.05.2023**

(51) International Patent Classification (IPC):
**G01K 1/08** *(2021.01)*       **G01K 13/02** *(2021.01)*

(52) Cooperative Patent Classification (CPC):
**G01K 13/028; G01K 1/08;** G01K 2205/02

(54) **METHODS FOR REDUCING ACOUSTIC NOISE ON TOTAL AIR TEMPERATURE SENSORS USING ADDITIVE MANUFACTURING**

VERFAHREN ZUR REDUZIERUNG VON AKUSTISCHEM RAUSCHEN AUF GESAMTLUFTTEMPERATURSENSOREN MITTELS GENERATIVER FERTIGUNG

PROCÉDÉS DE RÉDUCTION DU BRUIT ACOUSTIQUE SUR DES CAPTEURS DE TEMPÉRATURE TOTALE D'AIR À L'AIDE D'UNE FABRICATION ADDITIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.05.2022   US 202217746553**

(43) Date of publication of application:
**22.11.2023   Bulletin 2023/47**

(73) Proprietor: **ROSEMOUNT AEROSPACE INC.**
**Burnsville, MN 55306-4898 (US)**

(72) Inventors:
• **SABLE, Robert E.**
  **Lakeville, 55044 (US)**
• **PITERA, Rudy**
  **Inver Grove Heights, 55076 (US)**

(74) Representative: **Dehns**
**10 Old Bailey**
**London EC4M 7NG (GB)**

(56) References cited:
**EP-A2- 2 863 194        US-A- 4 062 239**
**US-A1- 2011 013 664**

## Description

### BACKGROUND

The present disclose relates to aircraft sensors, and in particular, to total air temperature (TAT) sensors.

Aircraft sensors are important to proper operation of airplanes. Among these aircraft sensors are TAT sensors which measure the temperature of the ambient air as well as the heat caused by the airspeed of the plane. Accurate information from these sensors is important to proper operation of the plane. These sensors often extend outward from the plane to get proper readings. Because TAT sensors extend outward from the plane, TAT sensors can experience unsteady flow which leads to Karman vortices and acoustic noise generation. The acoustic noise can be significant as unsteady flow oscillates from side to side on the TAT sensor. Therefore, solutions to reduce the noise generated by aircraft sensors that extend outward of the plane are desired. Aircraft sensors are disclosed in EP 2 863 194 A2, US 4 062 239 A and US 2011/013664 A1.

### SUMMARY

In one embodiment, a cover for an aircraft sensor is provided as defined by claim 1.

In another embodiment, an aircraft sensor assembly is provided as defined by claim 13.

### BRIEF DESCRIPTION OF THE DRAWINGS

FIG. 1. is a perspective view of an embodiment of a cover connected to an aircraft sensor.

FIG. 2. is a perspective view of the cover and aircraft sensor from FIG. 1 with the cover removed from the aircraft sensor.

FIG. 3A. is a perspective view of another embodiment of a cover connected to an aircraft sensor where the surface ridges are near a leading edge.

FIG. 3B. is a perspective view of another embodiment of the cover connected to an aircraft sensor where the surface ridges are near a trailing edge.

FIG. 4A. is a perspective view of another embodiment of a cover where trailing edges of the cover are secured via screws to the aircraft sensor.

FIG. 4B. is a perspective view of another embodiment of a cover with welding tabs on trailing edges of the cover.

FIG. 5A is a front view of another embodiment of the surface ridges where the surface ridges are V-shaped.

FIG. 5B is a front view of the surface ridges where the surface ridges are in rows and wave-shaped, and the rows are in-phase with respect to each other.

FIG. 5C is a front view of the surface ridges where the surface ridges are in rows and wave-shaped, and the rows are out-of-phase with respect to each other.

FIG. 6A is a cross-sectional view of another embodiment of the surface ridges with troughs and peaks that are equal in width.

FIG. 6B is a cross-sectional view of another embodiment of the surface ridges with troughs that are wider than peaks.

FIG. 6C is a cross-sectional view of another embodiment of the surface ridges where the surface ridges comprise a triangular cross-sectional profile.

FIG. 7A is a perspective view of a pitot probe.

FIG. 7B is a perspective view of a total air temperature probe.

FIG. 7C is a perspective view of an angle of attack sensor.

### DETAILED DESCRIPTION

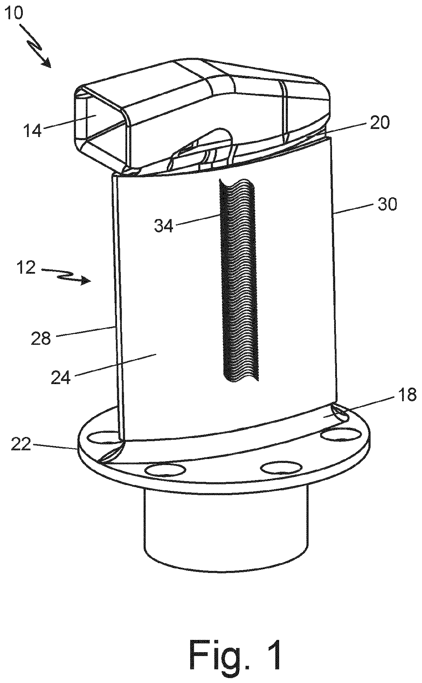

This disclosure relates to a cover for an aircraft sensor, and in particular to a cover for a total air temperature sensor. The cover can be additively manufactured. The cover includes surface ridges that can reduce acoustic noise generated by the aircraft sensor by altering a flow over the surface of the aircraft sensor. Further, the cover can reduce corrosion on the aircraft sensor by protecting the aircraft sensor from corrosive environments. This cover will be discussed below with reference to FIGS. 1-6C.

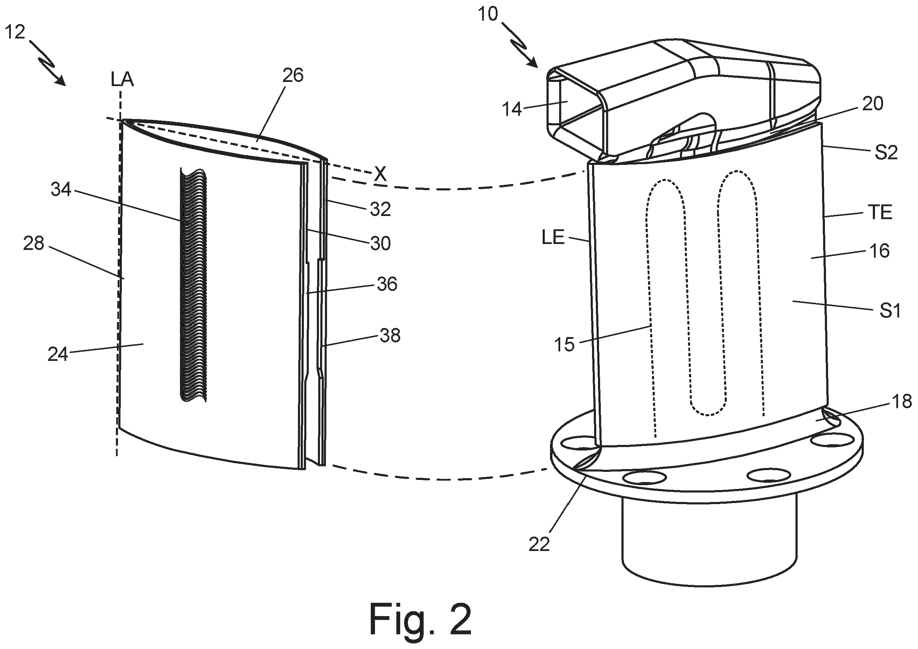

FIGS. 1 and 2 will be discussed concurrently. FIG. 1. is a perspective view of an embodiment of cover 12 connected to aircraft sensor 10. Aircraft sensor 10 includes probe head 14, strut 16, strut first end 18, strut second end 20, and mounting base 22. FIG. 2. is a perspective view of cover 12 from FIG. 1 removed from aircraft sensor 10. Cover 12 includes first side panel 24, second side panel 26, leading edge 28, first trailing edge 30, second trailing edge 32, surface ridges 34, first flange 36, second flange 38, longitudinal axis LA, and X axis.

Aircraft sensor 10 can include any number of aircraft sensors 10 including a total air temperature sensor, angle of attack sensor, pitot probe, or any other aircraft sensor 10 which extends beyond a body of an aircraft. When aircraft sensors 10 extend beyond the body of the aircraft, aircraft sensors 10 become subject to corrosion by the external environment and become subject to airflow. Airflow over aircraft sensor 10 can lead to acoustic noise generation. Depending on a shape of aircraft sensor 10, the acoustic noise generation can be significant enough to be heard inside of the aircraft leading to a potential discomfort among the aircraft crew and passengers. Cover 12 can be applied to any portion of aircraft sensor 10. Cover 12 can be applied to strut 16 of aircraft sensor 10. Alternatively, cover 12 can be applied to a probe head of aircraft sensor 10. Alternatively, cover 12 can be applied to a vane of aircraft sensor 10, such as to a vane body of an angle of attack sensor. Cover 12 partially encompasses the portion of aircraft sensor 10 to which it is applied.

Inside of probe head 14 of aircraft sensor 10 is instrumentation which can detect external conditions. The instrumentation inside of probe head 14 relays the information collected about the airflow to the aircraft for navigational purposes. Strut 16 connects to mounting base 22 at strut first end 18 and probe head 14 at strut second end 20. Strut 16 has leading edge LE, trailing edge TE, first surface S1 extending from leading edge LE to trailing edge TE and second surface S2 extending from leading edge LE to trailing edge TE. Cover 12 partially encloses a portion of strut 16. As shown in FIG. 1, first side panel 24 of cover 12 contacts and overlays first surface S1 of strut 16 while second side panel 26 of cover 12 contacts and overlays second surface S2 of strut 16. Cover 12 can extend from strut first end 18 to strut second end 20. Alternatively, cover 12 can cover any portion of the strut 16. Alternatively, cover 12 can cover any portion of aircraft sensor 10. Cover 12 can be applied when creating aircraft sensor 10 in a production facility. Application of cover 12 to strut 16 in a production facility can enable cover 12 to be brazed to aircraft sensor 10, thus improving the connection between cover 12 and aircraft sensor 10. Alternatively, cover 12 can be applied to aircraft sensors 10 that are already installed on airplanes.

When air flows over strut 16, the air first encounters leading edge LE. The air will be split so that some of the air flow goes towards first surface S1 and the rest will be sent towards second surface S2. Over time the proportion of the air flow that gets sent to the first side vs the second side will change. Without cover 12 and surface ridges 34 formed on cover 12, the oscillation of air flow between the first side to the second side leads to the formation of Karman vortices, which can lead to audible noise production. Interrupting the air flow via surface ridges 34 can reduce the formation of Karman vortices and therefore reduce the audible noise generation.

Under first surface S1 and second surface S2 of strut 16 are heaters 15. Heaters 15 produce heat and transfer the heat to first surface S1 and second surface S2 of strut 16. Heat produced by heaters 15 will hamper the formation of ice on strut 16. Ice formation on strut 16 can reduce the ability of the sensors inside probe head 14 to detect and relay information. Heaters 15 can use hot bleed air, electrical resistance heating, or any other method of producing heat known to those of skill in the art.

Mounting base 22 can connect to a surface. The surface can be an aircraft fuselage or any other suitable surface to which one of skill in the art would contemplate attaching aircraft sensor 10. Mounting base 22 can connect to the surface via bolts, screws, welds, brazing, or any other suitable attachment mechanism known to those of skill in the art for adhering one surface to another in aerospace applications.

Cover 12 is formed by first side panel 24 and second side panel 26 which join at leading edge 28. Leading edge 28 extends along longitudinal axis LA. In the embodiment shown in FIG. 2, longitudinal axis LA is perpendicular to X axis. First side panel 24 extends along X axis transverse longitudinal axis LA from leading edge 28 to first trailing edge 30. In alternative embodiments, an angle between the longitudinal axis LA and X axis can be acute. In these alternative embodiments, the angle can be less than 80 degrees, less than 70 degrees, or less than 60 degrees. Second side panel 26 extends from leading edge 28 along X axis transverse the longitudinal axis to second trailing edge 32. An angle between first side panel 24 and second side panel 26 near longitudinal axis LA can be less than 30 degrees, less than 20 degrees, less than 10 degrees, or less than 5 degrees. First side panel 24 is curved to match a curvature profile of first surface S1 of strut 16 and second side panel 26 is curved to match a curvature profile of second surface S2 of strut 16.

In the embodiment shown in FIG. 2, first side panel 24 and second side panel 26 can be equal in length. A length of first side panel 24 and a length of second side panel 26 is a distance along longitudinal axis LA. In an alternative embodiment, first side panel 24 can be longer than second side panel 26. In another alternative embodiment, second side panel 26 can be longer than first side panel 24. In the embodiment shown in FIG. 2, a width of first side panel 24 is equal to the width of second side panel 26. The width of first side panel 24 and the width of second side panel 26 are a distance along X axis. In an alternative embodiment, the width of first side panel 24 can be greater than the width of second side panel 26. In another alternative embodiment, the width of first side panel 24 can be less than the width of second side panel 26.

In the embodiment shown in FIG. 2, first trailing edge 30 and second trailing edge 32 are parallel and equidistant from X axis, where the distance between first trailing edge 30 and second trailing edge 32 is nonzero. In an alternative embodiment, first trailing edge 30 and second trailing edge 32 can be non-parallel. If first trailing edge 30 and second trailing edge 32 are non-parallel, first trailing edge 30 and second trailing edge 32 can be contacting each other nearest X axis and have a nonzero distance between them furthest X axis. Alternatively, if first trailing edge 30 and second trailing edge 32 are non-parallel, first trailing edge 30 and second trailing edge 32 can be contacting each other furthest X axis and have a nonzero distance between them nearest X axis. In an alternative embodiment first trailing edge 30 and second trailing edge 32 can be on the same side of X axis.

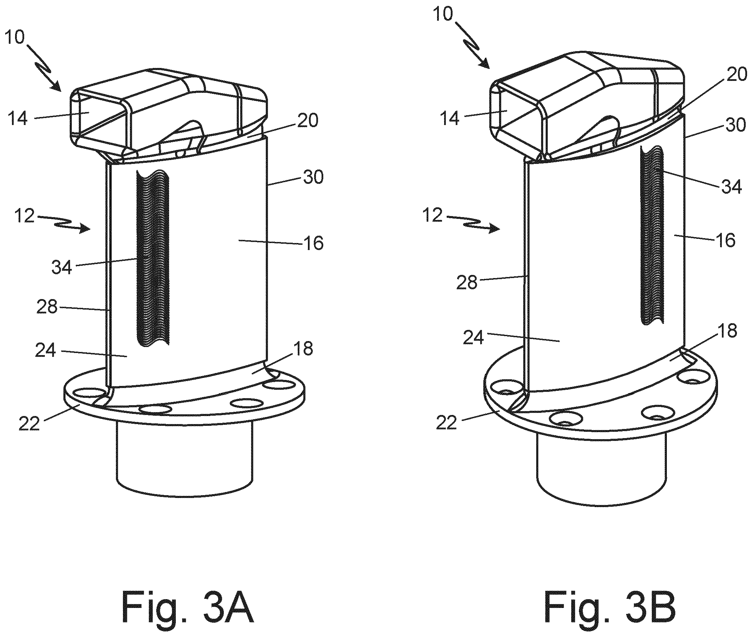

Surface ridges 34 can be formed on first side panel 24. Surface ridges 34 can also be formed on second side panel 26. Surface ridges 34 can project from an outward surface of cover 12. Alternatively, surface ridges 34 can be formed into a surface of cover 12. In the embodiment shown in FIG. 2, surface ridges 34 are formed on first side panel 24 and surface ridges 34 are not shown on second side panel 26. In alterative embodiments surface ridges 34 can be formed on first side panel 24 only, surface ridges 34 can be formed on second side panel 26 only, or surface ridges 34 can be formed on both first side panel 24 and second side panel 26. In the embodiment shown in FIG. 2, surface ridges 34 are formed equidistant leading edge 28 and trailing edges 30, 32 in the direction of X axis. As discussed below with respect to FIGS. 3A-3B, surface ridges 34 can be formed proximate leading edge 28 or proximate trailing edges 30, 32.

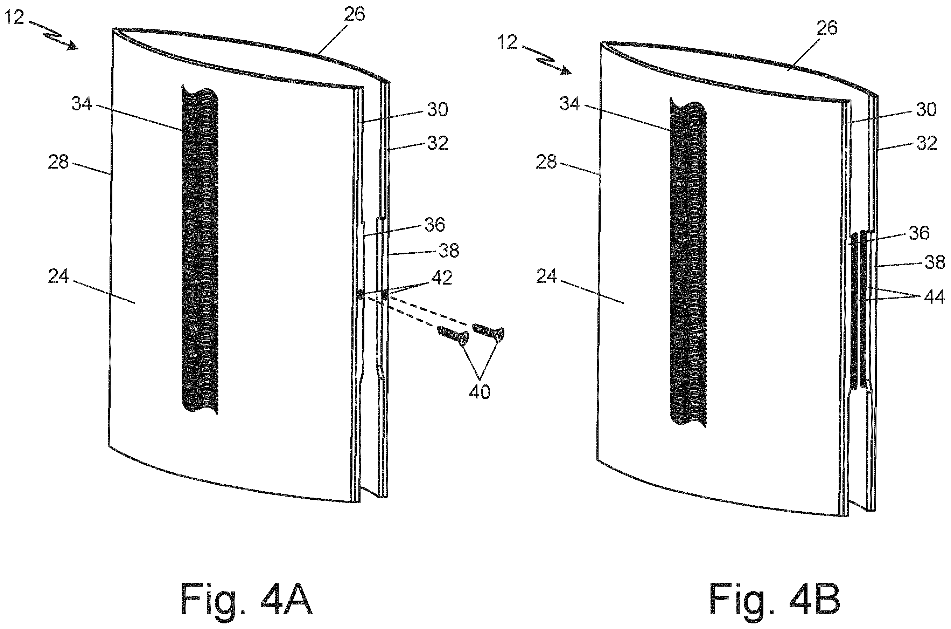

First side panel 24 has first flange 36 formed thereon. First flange 36 is formed on first trailing edge 30 of first side panel 24 and extends towards second trailing edge 32 of second side panel 26. Second side panel 26 has second flange 38 formed thereon. Second flange 38 is formed on second trailing edge 32 of second side panel 26 and extends towards first trailing edge 30 of first side panel 24. First flange 36 and second flange 38 together function to hold cover 12 on aircraft sensor 10. First flange 36 and second flange 38 hold cover 12 on aircraft sensor 10 by partially enclosing trailing edge TE of strut 16 of aircraft sensor 10. First flange 36 and second flange 38 contact trailing edge TE of strut 16. As such, cover 12 would need to be pried open at trailing edges (30, 32) to remove cover 12 from strut 16 of aircraft sensor 10. First flange 36 and second flange 38 can further secure cover 12 to aircraft sensor 10 at attachment points as discussed below with respect to FIGS. 4A-4B. A transition between first flange 36 and first trailing edge 30 can be sloped or the transition can be a right angle. A transition between second flange 38 and second trailing edge 32 can be sloped or the transition can be a right angle.

Cover 12 can be formed by multiple methods. Cover 12 along with surface ridges 34 can be formed via an additive manufacturing process, such as laser powder bed fusion. Surface ridges 34 formed via an additive manufacturing process will be integral with the outer shell. In the additive manufacturing process, cover 12 can be formed by forming an outer shell layer-by-layer along with a supportive core enclosed by the outer shell. The supportive core comprises a lattice structure. Surface ridges 34 can be formed on the outer shell when forming the outer shell. The supportive core is subsequently removed once the additive manufacturing process is complete. Alternatively, cover 12 can be formed by a combination of rolling and stamping. Cover 12 can be formed by rolling a sheet of material, trimming the edges of the sheet, stamping surface ridges 34 into cover 12, and bending the sheet into the shape of cover 12. By stamping surface ridges 34 into cover 12, surface ridges 34 are integral with cover 12. Alternatively, cover 12 can be formed via rolling and bending with surface ridges 34 added to cover 12 via an additive manufacturing process. Cover 12 can be formed by milling cover 12 from a larger block of material. When milling cover 12, surface ridges 34 are milled from the larger block of material so that surface ridges are integral and continuous with cover 12.

A corrosion resistant topcoat of another material can be applied to cover 12. The corrosion resistant topcoat can be applied via electroplating, chemical vapor deposition, or any other method known to those of skill in the art to apply a corrosion resistant topcoat to another surface. Cover 12 can be formed of pure copper, a copper alloy, nickel, and combinations thereof. Cover 12 can be formed of any highly thermally conductive material. A highly thermally conductive material has a heat transfer coefficient of greater than $50 \frac{W}{mk}$, of greater than $100 \frac{W}{mk}$, or of greater than $150 \frac{W}{mk}$. Forming cover 12 from any highly thermally conductive material enables heat produced in strut 16 to transfer through cover 12. Heat from strut 16 reduces ice accumulation. Ice accumulation can reduce the accuracy of the instrumentation in probe head 14.

FIGS. 3A-3B disclose alternative locations of surface ridges 34 and will be discussed together. FIG. 3A. is a perspective view of another embodiment of cover 12 connected to aircraft sensor 10 where surface ridges 34 are near leading edge 28. FIG. 3B. is a perspective view of another embodiment of cover 12 connected to aircraft sensor 10 where surface ridges 34 are near trailing edge 30.

Surface ridges 34 can be formed anywhere on the surface of cover 12. As discussed above with respect to FIG. 2, the location of surface ridges 34 in FIG. 2 are equidistant leading edge 28 and trailing edges 30, 32. Surface ridges 34 of FIG. 2 extend substantially in the direction of longitudinal axis LA. In the alternative embodiment of FIG. 3A, surface ridges 34 are proximate leading edge 28 of cover 12. Surface ridges 34 of FIG. 3A extend substantially in the direction of longitudinal axis LA. In the alternative embodiment of FIG. 3B, surface ridges 34 are proximate trailing edges 30, 32 of cover 12. Surface ridges 34 of FIG. 3B extend substantially in the direction of longitudinal axis LA. In alternative embodiments not shown in the figures, surface ridges 34 can extend at an angle with respect to longitudinal axis LA. The angle between a direction that surface ridges 34 substantially extend and the longitudinal axis LA can be at least 5 degrees, at least 10 degrees, or at least 25 degrees. In alternative embodiments not shown in the figures, there can be multiple columns of surface ridges 34. Each column of surface ridges 34 can have a different orientation with respect to longitudinal axis LA, a different ridge pattern, and/or a different cross-sectional pattern.

FIGS. 4A-4B disclose alternate attachment mechanisms and will be discussed together. FIG. 4A. is a perspective view of another embodiment of cover 12 where trailing edges 30, 32 of cover 12 are secured via screw 40 to aircraft sensor 10. FIG. 4B. is a perspective view of another embodiment of cover 12 with welding tabs 44 on trailing edges 30, 32 of cover 12.

Cover 12 can be secured to strut 16 via a multitude of alternative methods. Cover 12 has first flange 36 and second flange 38 which hold cover 12 in place when cover 12 partially encloses strut 16. As shown in the embodiment of FIG. 4A, cover 12 can be held to strut 16 via fasteners 40. Fasteners 40 extend through fastener holes 42 which extend through first flange 36 and second flange 38. Fastener holes 42 can be placed anywhere on first flange 36 and second flange 38. Fasteners 40 hold first trailing edge 30 and second trailing edge 32 near the trailing edge of strut 16. These fasteners are reversible in that fasteners 40 can be unsecured. As shown in the embodiment of FIG. 4B, cover can be held to strut 16 via welds. These welds are formed between welding tabs 44 and trailing edge TE of strut 16. Welding tabs 44 each extend from both first flange 36 and second flange 38. Welding tabs 44 can vary in thickness based on localized needs of the weld. The varied thicknesses can be obtained via an additive manufacturing process. A varied thickness of welding tabs 44 can reduce warping of cover 12 due to the heat differentials created by welding. In alternative embodiments not shown in the figures, cover 12 can be secured to strut 16 through adhesives or any other attachment mechanism known to those of skill in the art.

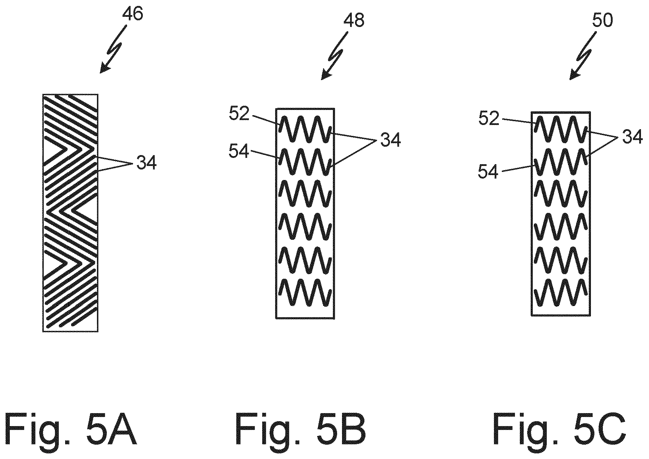

FIGS. 5A-5C discuss alternative embodiments and patterns of surface ridges 34 and will be discussed together. FIG. 5A is a front view of another embodiment of surface ridges 34 where surface ridges 34 have V-shaped profile 46. FIG. 5B is a front view of surface ridges 34 where surface ridges 34 have a wave-shaped profile 48 and are in rows 52, 54. In the embodiment of FIG. 5B, wave-shaped profile 48 of row 52 is in-phase with wave-shaped profile 48 of row 54. FIG. 5C is a front view of surface ridges 34 where surface ridges 34 have wave-shaped profile 50 and are in rows 52, 54. As shown in FIG. 5C, wave-shaped profile 50 of row 52 is out-of-phase 50 with wave-shaped profile 50 of row 54.

Surface ridges 34 can have multiple different patterns. Each of the different surface ridges 34 produce different flow dynamics as air flows over them. As shown in the embodiment of FIG. 5A, surface ridges 34 can have V-shaped profile 46. V-shaped profile 46 of surface ridges 34 have multiple V-shaped ridge. V-shaped ridges project from the surface of cover 12. The apex of each of V-shaped ridge is arranged in a straight line. The wings of each of V-shaped ridge are equal in length and meet the wings of other V shaped ridges. Alternatively, V-shaped ridges can be formed of indentations into the surface of cover 12.

As shown in the embodiment of FIG. 5B, surface ridges 34 can have wave-shaped profiles 48 with in-phase sinusoidal ridges. In-phase sinusoidal ridges are composed of alternating rows 52, 54 of surface ridges 34. When wave-shaped profiles 48 of surface ridges 34 are in-phase sinusoidally, a peak of first row 52 is in line with a peak of second row 54, while a trough of first row 52 is in line with a trough of second row 54. Wave-shaped profiles 48 can project from the surface of cover 12. Alternatively, wave-shaped profiles 48 can be formed of indentations into the surface of cover 12.

As shown in the embodiment of FIG. 5C, surface ridges 34 can have wave-shaped profiles 50 that are out-of-phase sinusoidal ridges. Out-of-phase sinusoidal ridges are composed of alternating rows 52, 54 of surface ridges 34. When surface ridges 34 are out-of-phase sinusoidal ridges, a peak of first row 52 is in line with a trough of second row 54, while a trough of first row 52 is in line with a peak of second row 54. Wave-shaped profiles 50 can project from the surface of cover 12. Alternatively, wave-shaped profiles 50 can be formed of indentations into the surface of cover 12. In an alternative embodiment not shown in the figures, surface ridges 34 can be composed of sinusoidal ridges where a frequency of first row 52 is not equal to the frequency of second row 54. As such, at some points a peak of first row 52 will align with a peak of second row 54, whereas at other points the peak of first row 52 will not align with the peak of second row 54.

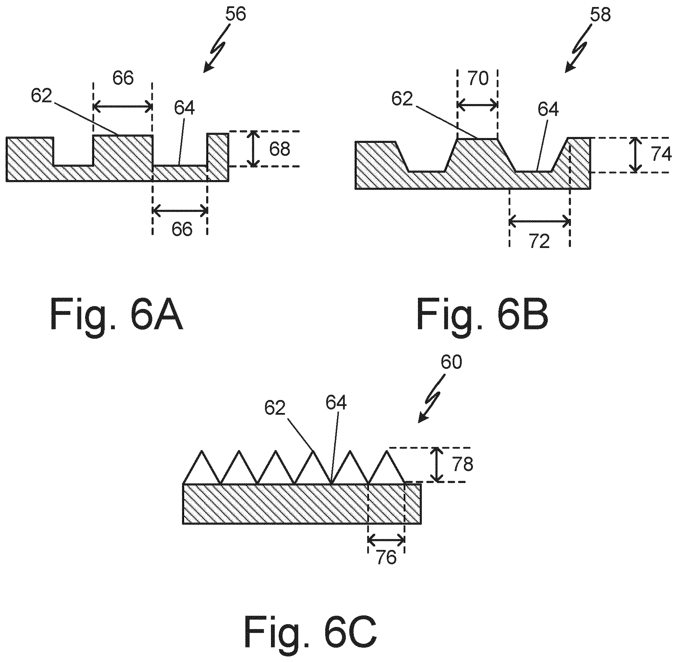

FIGS. 6A-6C show various possible cross-sectional profiles for surface ridges 34 and will be discussed together. Surface ridges 34 formed on the surface of cover 12 can have many different cross-sectional profiles. These cross-sectional profiles change the way that air flows through surface ridges 34 and can decrease Karman vortices and/or manufacturing costs. FIG. 6A is a cross-sectional view of one possible embodiment of surface ridges 34 with troughs 64 and peaks 62 that are equal in width. Equal width pattern 56 of surface ridges 34 includes first width 66 and first depth 68. FIG. 6B is a cross-sectional view of another embodiment of surface ridges 34 with troughs 64 that are wider than peaks 62. Wide trough pattern 58 of FIG. 6B includes second width 70, third width 72, and second depth 74. FIG. 6C is a cross-sectional view of another embodiment of surface ridges 34 where surfaces ridges 34 comprise a triangular cross-sectional profile 60. Triangular cross-sectional profile 60 has fourth width 76 and third depth 78.

As shown in the embodiment of FIG. 6A, surface ridges 34 can have equal width pattern 56. In equal width pattern 56, a width of peak 62 is equal to a width of trough 64 which is equal to first width 66. Troughs 64 have a depth equal to first depth 68. Peaks 62 and troughs 64 in FIG. 6A have substantially flat regions. The transitions between peaks 62 and troughs 64 in FIG. 6A are substantially vertical relative the flat regions of peaks 62 and troughs 64. During the manufacture of cover 12, troughs 64 in FIG. 6A can be cut into cover 12. Alternatively, peaks 62 in FIG. 6A can be pressed higher than troughs 64. Peaks 62 of FIG. 6A can also be additively formed onto cover 12.

As shown in the embodiment of FIG. 6B, surface ridges 34 can have wide trough pattern 58. In wide trough pattern 58, peaks 62 have a width equal to second width 70 while troughs 64 have a width equal to third width 72. Third width 72 is larger than second width 70. Troughs 64 have a depth equal to second depth 74. Troughs 64 and peaks 62 can have substantially flat regions. The transitions between troughs 64 and peaks 62 can be sloped. During manufacture of cover 12, troughs 64 of FIG. 6B can be cut into cover 12. Alternatively, peaks 62 of FIG. 6B can be pressed higher than troughs 64. Peaks 62 of FIG. 6B can also be additively formed onto cover 12.

As shown in the embodiment of FIG. 6C, surface ridges 34 can have a triangular cross-sectional profile 60. Peaks 62 of triangular cross-sectional profile 60 are pointed and troughs 64 of triangular cross-sectional profile 60 are V-shaped. The width of each triangle is fourth width 76 while the height of each triangle is equal to third depth 78. During manufacture of cover 12, troughs 64 of FIG. 6C can be cut into cover 12. Alternatively, peaks 62 of FIG. 6C can be pressed higher than troughs 64. Peaks 62 of FIG. 6C can also be additively formed onto cover 12.

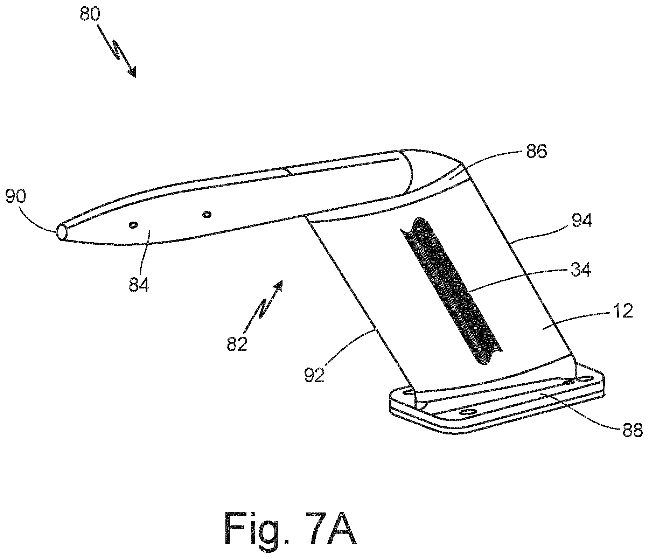

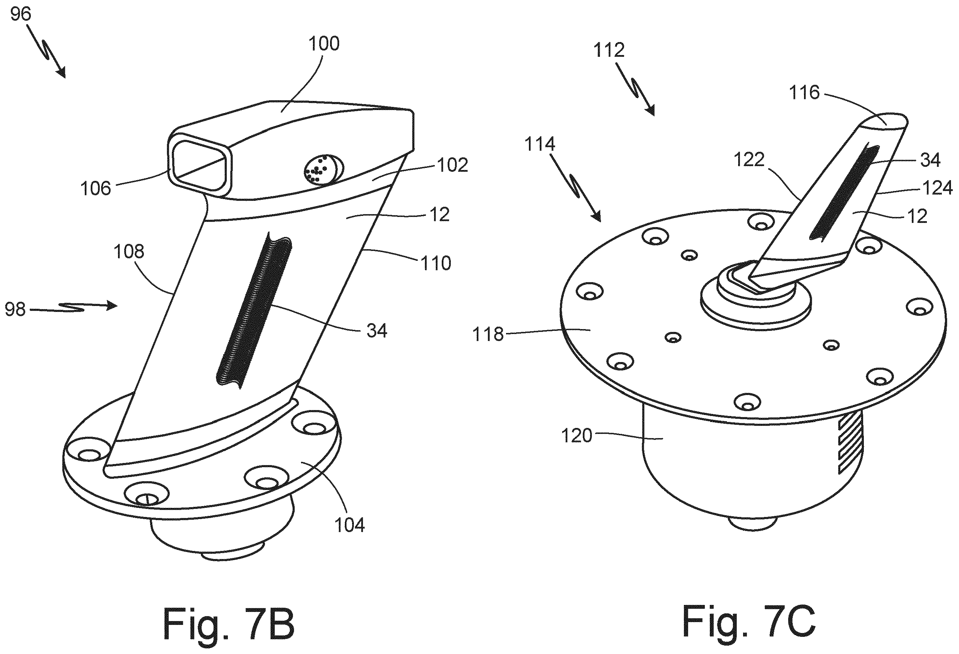

While cover 12 has been described above, with respect to FIGS. 1-4A, to be mountable to strut 16 of a total air temperature sensor, it will be understood by those skilled in the art that cover 12 can be mounted to other aircraft sensors and probes. In addition, many modifications can be made to adapt a particular situation or material to the teachings of the invention without departing from the essential scope thereof. Therefore, it is intended that the invention not be limited to a vertical strut of a total air temperature sensor as disclosed with respect to FIGS. 1-4A, but that the invention will include all embodiments falling within the scope of the appended claims. For example, FIGS. 7A-7C show various alternative probes onto which cover 12 can be placed. Cover 12 according to an exemplary embodiment of this disclosure, among other possible things can be placed onto pitot tube 80 as discussed in FIG. 7A, total air temperature sensor 96 as described in FIG. 7B, angle of attack sensor 112 as described in FIG. 7C, and any other aircraft probe.

FIG. 7A is a perspective view of pitot probe 80. Pitot probe 80 includes body 82, formed by probe head 84 and strut 86, and mounting flange 88. Probe head 84 includes tip 90. Strut 86 includes leading edge 92 and trailing edge 94. Cover 12 with surface ridges 34 can be applied to strut 86.

As best shown in FIG. 7A. Pitot probe 80 can be a pitot-static probe or any other suitable air data probe. Body 82 of pitot probe 80 is formed by probe head 84 and strut 86. Probe head 84 is the sensing head of pitot probe 80. Probe head 84 is a forward portion of pitot probe 80. Probe head 84 has one or more ports positioned in probe head 84. Internal components of pitot probe 80 are located within probe head 84. Probe head 84 is connected to a first end of strut 86. Probe head 84 and strut 86 make up body 82 of pitot probe 80. Strut 86 can be blade shaped. Internal components of pitot probe 80 are located within strut 86. Strut 86 is adjacent mounting flange 88. A second end of strut 86 is connected to mounting flange 88. Mounting flange 88 makes up a mount of pitot probe 80. Mounting flange 88 is connectable to an aircraft.

Probe head 84 has tip 90 at a forward, or upstream, portion of probe head 84. Tip 90 is at the end of probe head 84 opposite the end of probe head 84 connected to strut 86. Strut 86 has leading edge 92 at a forward, or upstream, side of strut 86 and trailing edge 94 at an aft, or downstream, side of strut 86. Leading edge 92 is opposite trailing edge 94.

Pitot probe 80 can be installed on an aircraft. Pitot probe 80 can be mounted to a fuselage of the aircraft via mounting flange 88 and fasteners, such as screws or bolts. Strut 86 holds probe head 84 away from the fuselage of the aircraft to expose probe head 84 to external airflow. Probe head 84 takes in air from surrounding external airflow and communicates air pressures pneumatically through internal components and passages of probe head 84 and strut 86. Pressure measurements are communicated to a flight computer and can be used to generate air data parameters related to the aircraft flight condition. Cover 12 can be applied to strut 86. Cover 12 can extend from probe head 84 to mounting flange 88. Cover 12 can extend from leading edge 92 to trailing edge 94. Cover 12 and surface pattern 34 provide the same benefits to pitot probe 80 as described above with reference to FIG. 2.

FIG. 7B is a perspective view of total air temperature probe 96. Total air temperature probe 96 includes body 98, with head 100 and strut 102, and mounting flange 104. Head 100 includes inlet scoop 106. Strut 102 includes leading edge 108 and trailing edge 110. Cover 12 with surface ridges 34 can be applied to strut 102. As best shown in FIG. 7B, body 98 of total air temperature probe 96 is formed by head 100 and strut 102. Head 100 is connected to a first end of strut 102. Head 100 and strut 102 make up body 98 of total air temperature probe 96. Internal components of total air temperature probe 96 are located within strut 102. Strut 102 is adjacent mounting flange 104. A second end of strut 102 is connected to mounting flange 104. Mounting flange 104 makes up a mount of total air temperature probe 96. Mounting flange 104 is connectable to an aircraft.

Head 100 has inlet scoop 106, which is a forward portion of total air temperature probe 96. Inlet scoop 106 is an opening in a forward, or upstream, end of head 100. Strut 102 has leading edge 108 at a forward, or upstream, side of strut 102 and trailing edge 110 at an aft, or downstream, side of strut 102. Leading edge 108 is opposite trailing edge 110.

Total air temperature probe 96 can be installed on an aircraft. Total air temperature probe 96 can be mounted to a fuselage of the aircraft via mounting flange 104 and fasteners, such as screws or bolts. Strut 102 holds head 100 away from the fuselage of the aircraft to expose head 100 to external airflow. Air flows into total air temperature probe 96 through inlet scoop 106 of head 100. Air flows into an interior passage within strut 102 of total air temperature probe 96, where sensing elements measure the total air temperature of the air. Total air temperature measurements of the air are communicated to a flight computer. Such measurements can be used to generate air data parameters related to the aircraft flight condition. Cover 12 can be applied to strut 102. Cover 12 can extend from head 100 to mounting flange 104. Cover 12 can extend from leading edge 108 to trailing edge 110. Cover 12 and surface pattern 34 provide the same benefits to total air temperature probe 96 as described above with reference to FIG. 2.

FIG. 7C is a perspective view of angle of attack sensor 112. Angle of attack sensor 112 includes body 114, formed by vane 116 and faceplate 118, and housing 120. Vane 116 includes leading edge 122 and trailing edge 124. Cover 12 with surface ridges 34 can be applied to vane 116. As best shown in FIG. 7C, body 114 of angle of attack sensor 112 is formed by vane 116 and faceplate 118. Vane 116 is adjacent faceplate 118. Vane 116 and faceplate 118 make up body 114 of angle of attack sensor. Faceplate 118 makes up a mount of angle of attack sensor 112. Faceplate 118 is connectable to an aircraft. Faceplate 118 is positioned on and connected to housing 120. Internal components of angle of attack sensor 112 are located within housing 120. Vane 116 has leading edge 122 at a forward, or upstream, side of vane 116 and trailing edge 124 at an aft, or downstream, side of vane 116. Leading edge 122 is opposite trailing edge 124.

Angle of attack sensor 112 is installed on an aircraft. Angle of attack sensor 112 can be mounted to a fuselage of the aircraft via faceplate 118 and fasteners, such as screws or bolts. Vane 116 extends outside an exterior of the aircraft and is exposed to external airflow, and housing 120 extends within an interior of the aircraft. External airflow causes vane 116 to rotate with respect to faceplate 118 via a series of bearings within angle of attack sensor 112. Vane 116 rotates based on the angle at which the aircraft is flying relative to the external oncoming airflow. Vane 116 causes rotation of a vane base and vane shaft within housing 120. The vane shaft is coupled to a rotational sensor that measures the local angle of attack or angle of the airflow relative to the fixed aircraft structure. The measured angle of attack is communicated to a flight computer and can be used to generate air data parameters related to the aircraft flight condition. Cover 12 can be applied to vane 116. Cover 12 can extend from a tip of vane 116 to a base of vane 116. The tip is opposite the base, while the base is the portion of vane 116 which is nearest to faceplate 118. Cover 12 can extend from leading edge 122 to trailing edge 124. Cover 12 and surface pattern 34 provide the same benefits to angle of attack sensor 112 as described above with reference to FIG. 2.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1.    A cover (12) for an aircraft sensor comprising:

a leading edge (28), the leading edge extending along a longitudinal axis;
a first side panel (24) extending from the leading edge in a positive x direction transverse to the longitudinal axis;
a second side panel (26) extending from the leading edge in the positive x direction;
a first trailing edge (30) on the first side panel, the first trailing edge opposite the leading edge;
a second trailing edge (32) on the second side panel, the second trailing edge opposite the leading edge; and
a first plurality of ridges (34) on an outer surface of the first side panel.

2.    The cover of claim **1,** wherein the second side panel further comprises a second plurality of ridges on an outer surface of the second side panel.

3.    The cover of claim 1 or 2, wherein the first side panel further comprises a first flange (36) on the first trailing edge and extending toward the second trailing edge and the second side panel further comprises a second flange (38) on the second trailing edge extending toward the first trailing edge.

4.    The cover of any preceding claim, wherein the first plurality of ridges extends along the longitudinal axis.

5.    The cover of any preceding claim, wherein ridgelines of the first plurality of ridges are V-shaped.

6.    The cover of any preceding claim, wherein the first plurality of ridges comprises a first column of ridges and a second column of ridges, wherein the first column of ridges is in phase with the second column of ridges in the x direction, or wherein the first plurality of ridges comprises a first column of ridges and a second column of ridges, wherein the first column of ridges is out of phase with the second column of ridges in the x direction.

7.    The cover of any preceding claim, wherein the cover is manufactured via an additive manufacturing process and the first side panel and the second side panel are both convex.

8.    The cover of claim 1, wherein the first plurality of ridges (34) is proximate the leading edge, or wherein the first plurality of ridges (34) is proximate the trailing edge, or wherein the first plurality of ridges (34) is equidistant between the leading edge and the trailing edge on the outer surface of the first plate.

9. The cover of claim 1, further comprising:

   a first welding tab (44) extending from the first trailing edge; and
   a second welding tab (44) extending from the second trailing edge.

10. The cover of claim 1, further comprising:

   a first tab extending from the first trailing edge toward the second trailing edge;
   a second tab extending from the second trailing edge toward the first trailing edge;
   a first hole (42) in the first tab;
   a second hole (42) in the second tab;
   a first fastener (40) for insertion into the first hole; and
   a second fastener (40) for insertion into the second hole.

11. The cover of any of claims 1 to 10, wherein the first plurality of ridges (34) comprises:

   a pattern of troughs and peaks,
   wherein a width of each trough is equal to a width of each peak, or
   wherein a width of a trough in the pattern is wider than a width of a peak.

12. The cover of any of claims 1 to 11, wherein a cross-sectional profile of the first plurality of ridges (34) is triangular.

13. An aircraft sensor assembly comprising:

   a mounting base (22) for attachment to a surface;
   a probe head (14);
   a strut (16) comprising:

   a first end connected to the mounting base;
   a second end connected to the probe head; and
   a strut body extending from the first end of the strut to the second end of the strut; and

   the cover (12) of any preceding claim, partially enclosing the strut body.

14. The aircraft sensor assembly of claim 13, wherein an inside surface of the cover contacts an outside surface of the strut body, and optionally wherein the strut further comprises:

a heater element within the strut body beneath the outside surface of the strut body.

**Patentansprüche**

1. Abdeckung (12) für einen Flugzeugsensor, umfassend:

   eine Vorderkante (28), wobei sich die Vorderkante entlang einer Längsachse erstreckt;
   eine erste Seitenplatte (24), die sich von der Vorderkante in einer positiven x-Richtung quer zu der Längsachse erstreckt;
   eine zweite Seitenplatte (26), die sich von der Vorderkante in der positiven x-Richtung erstreckt;
   eine erste Hinterkante (30) auf der ersten Seitenplatte, wobei die erste Hinterkante der Vorderkante gegenüberliegt;
   eine zweite Hinterkante (32) auf der zweiten Seitenplatte, wobei die zweite Hinterkante der Vorderkante gegenüberliegt; und
   eine erste Vielzahl von Rippen (34) auf einer Außenfläche der ersten Seitenplatte.

2. Abdeckung nach Anspruch 1, wobei die zweite Seitenplatte ferner eine zweite Vielzahl von Rippen auf einer Außenfläche der zweiten Seitenplatte umfasst.

3. Abdeckung nach Anspruch 1 oder 2, wobei die erste Seitenplatte ferner einen ersten Flansch (36) auf der ersten Hinterkante umfasst, der sich in Richtung der zweiten Hinterkante erstreckt, und die zweite Seitenplatte ferner einen zweiten Flansch (38) auf der zweiten Hinterkante umfasst, der sich in Richtung der ersten Hinterkante erstreckt.

4. Abdeckung nach einem der vorhergehenden Ansprüche, wobei sich die erste Vielzahl von Rippen entlang der Längsachse erstreckt.

5. Abdeckung nach einem der vorhergehenden Ansprüche, wobei die Rippenlinien der ersten Vielzahl von Rippen V-förmig sind.

6. Abdeckung nach einem der vorhergehenden Ansprüche, wobei die erste Vielzahl von Rippen eine erste Spalte von Rippen und eine zweite Spalte von Rippen umfasst, wobei die erste Spalte von Rippen in der x-Richtung in Phase mit der zweiten Spalte von Rippen ist, oder wobei die erste Vielzahl von Rippen eine erste Spalte von Rippen und eine zweite Spalte von Rippen umfasst, wobei die erste Spalte von Rippen in der x-Richtung außer Phase mit der zweiten Spalte von Rippen ist.

7. Abdeckung nach einem der vorhergehenden Ansprüche, wobei die Abdeckung mittels eines generativen Fertigungsverfahrens hergestellt ist und sowohl die erste Seitenplatte als auch die zweite Seitenplatte konvex sind.

8. Abdeckung nach Anspruch 1, wobei die erste Vielzahl von Rippen (34) in der Nähe der Vorderkante liegt, oder wobei die erste Vielzahl von Rippen (34) in der Nähe der Hinterkante liegt, oder wobei sich die Vielzahl von Rippen (34) in gleichem Abstand zwischen der Vorderkante und der Hinterkante auf der äußeren Fläche der ersten Platte befindet.

9. Abdeckung nach Anspruch 1, ferner umfassend:

   eine erste Schweißlasche (44), die sich von der ersten Hinterkante erstreckt; und
   eine zweite Schweißlasche (44), die sich von der zweiten Hinterkante erstreckt.

10. Abdeckung nach Anspruch 1, ferner umfassend:

    eine erste Lasche, die sich von der ersten Hinterkante in Richtung der zweiten Hinterkante erstreckt;
    eine zweite Lasche, die sich von der zweiten Hinterkante in Richtung der ersten Hinterkante erstreckt;
    ein erstes Loch (42) in der ersten Lasche;
    ein zweites Loch (42) in der zweiten Lasche;
    eine erste Befestigungseinrichtung (40) zum Einsetzen in das erste Loch; und
    eine zweite Befestigungseinrichtung (40) zum Einsetzen in das zweite Loch.

11. Abdeckung nach einem der Ansprüche 1 bis 10, wobei die erste Vielzahl von Rippen (34) umfasst:

    ein Muster von Mulden und Erhebungen, wobei eine Breite jeder Mulde gleich einer Breite jeder Erhebung ist, oder
    wobei eine Breite einer Mulde in dem Muster breiter ist als eine Breite einer Erhebung.

12. Abdeckung nach einem der Ansprüche 1 bis 11, wobei ein Querschnittsprofil der ersten Vielzahl von Rippen (34) dreieckig ist.

13. Flugzeugsensoranordnung, umfassend:

    eine Montagebasis (22) zur Anbringung an einer Fläche;
    einen Sondenkopf (14);
    eine Strebe (16), umfassend:

       ein erstes Ende, das mit der Montagebasis verbunden ist;
       ein zweites Ende, das mit dem Sondenkopf verbunden ist; und
einen Strebenkörper, der sich von dem ersten Ende der Strebe zu dem zweiten Ende der Strebe erstreckt; und
die Abdeckung (12) nach einem der vorhergehenden Ansprüche, die den Strebenkörper teilweise umschließt.

14. Flugzeugsensoranordnung nach Anspruch 13, wobei eine Innenfläche der Abdeckung eine Außenfläche des Strebenkörpers berührt, und wobei die Strebe optional ferner umfasst:
ein Heizelement innerhalb des Strebenkörpers unterhalb der Außenfläche des Strebenkörpers.

**Revendications**

1. Couvercle (12) pour capteur d'aéronef comprenant :

   un bord d'attaque (28), le bord d'attaque se prolongeant le long d'un axe longitudinal ;
   un premier panneau latéral (24) se prolongeant à partir du bord d'attaque dans une direction x positive transversale à l'axe longitudinal ;
   un second panneau latéral (26) se prolongeant à partir du bord d'attaque dans la direction x positive ;
   un premier bord de fuite (30) sur le premier panneau latéral, le premier bord de fuite étant opposé au bord d'attaque ;
   un second bord de fuite (32) sur le second panneau latéral, le second bord de fuite étant opposé au bord d'attaque ; et
   une première pluralité de crêtes (34) sur une surface extérieure du premier panneau latéral.

2. Couvercle selon la revendication 1, dans lequel le second panneau latéral comprend également une seconde pluralité de crêtes sur une surface extérieure du second panneau latéral.

3. Couvercle selon la revendication 1 ou 2, dans lequel le premier panneau latéral comprend également une première bride (36) sur le premier bord de fuite et se prolongeant vers le second bord de fuite et le second panneau latéral comprend également une seconde bride (38) sur le second bord de fuite se prolongeant vers le premier bord de fuite.

4. Couvercle selon une quelconque revendication précédente, dans lequel la première pluralité de crêtes se prolongent le long de l'axe longitudinal.

5. Couvercle selon une quelconque revendication précédente, dans lequel les lignes de crête de la première pluralité de crêtes sont en forme de V.

6. Couvercle selon une quelconque revendication précédente, dans lequel la première pluralité de crêtes comprennent une première colonne de crêtes et une seconde colonne de crêtes, dans lequel la première colonne de crêtes sont en phase avec la seconde colonne de crêtes dans la direction x, ou dans lequel la première pluralité de crêtes comprennent une première colonne de crêtes et une seconde colonne de crêtes, dans lequel la première colonne de crêtes sont déphasées par rapport à la seconde colonne de crêtes dans la direction x.

7. Couvercle selon une quelconque revendication précédente, dans lequel le couvercle est fabriqué via un procédé de fabrication additive et le premier panneau latéral et le second panneau latéral sont tous deux convexes.

8. Couvercle selon la revendication 1, dans lequel la première pluralité de crêtes (34) sont proches du bord d'attaque, ou dans lequel la première pluralité de crêtes (34) sont proches de bord de fuite, ou dans lequel la première pluralité de crêtes (34) sont équidistantes entre le bord d'attaque et le bord de fuite sur la surface extérieure de la première plaque.

9. Couvercle selon la revendication 1, comprenant également :

   une première languette de soudage (44) se prolongeant à partir du premier bord de fuite ; et
   une seconde languette de soudage (44) se prolongeant à partir du second bord de fuite.

10. Couvercle selon la revendication 1, comprenant également :

   une première languette se prolongeant du premier bord de fuite au second bord de fuite ;
   une seconde languette se prolongeant du second bord de fuite au premier bord de fuite ;
   un premier trou (42) dans la première languette ;
   un second trou (42) dans la seconde languette ;
   un premier élément de fixation (40) à insérer dans le premier trou ; et
   un second élément de fixation (40) à insérer dans le second trou.

11. Couvercle selon l'une quelconque des revendications 1 à 10, dans lequel la première pluralité de crêtes (34) comprennent :

   un modèle de creux et de pics,
   dans lequel une largeur de chaque creux est égale à la largeur de chaque pic, ou
   dans lequel une largeur d'un creux dans le motif est plus large que la largeur d'un pic.

12. Couvercle selon l'une quelconque des revendications 1 à 11, dans lequel un profil en coupe transversale de la première pluralité de crêtes (34) est triangulaire.

13. Ensemble de capteur pour aéronef, comprenant :

   une base de montage (22) pour la fixation à une surface ;
   une tête de sonde (14) ;
   un soufflet (16) comprenant :

      une première extrémité connectée à la base de montage ;
      une seconde extrémité connectée à la tête de la sonde ; et
      un corps de jambe de force se prolongeant de la première extrémité de la jambe de force à la seconde extrémité de la jambe de force ; et
      le couvercle (12) selon une quelconque revendication précédente, entourant partiellement le corps de la jambe de force.

14. Ensemble de capteur pour aéronef selon la revendication 13, dans lequel une surface intérieure du couvercle est en contact avec une surface extérieure du corps de la jambe de force, et éventuellement dans lequel la jambe de force comprend également : un élément chauffant à l'intérieur du corps de la jambe de force sous la surface extérieure du corps de la jambe de force.

Fig. 1

Fig. 2

Fig. 3A

Fig. 3B

Fig. 4B

Fig. 4A

Fig. 5A

Fig. 5B

Fig. 5C

Fig. 6A

Fig. 6B

Fig. 6C

EP 4 279 887 B1

Fig. 7A

EP 4 279 887 B1

Fig. 7B

Fig. 7C

EP 4 279 887 B1

**EP 4 279 887 B1**

**REFERENCES CITED IN THE DESCRIPTION**

**Patent documents cited in the description**

- EP 2863194 A2
- US 4062239 A
- US 2011013664 A1